# EUROPEAN PATENT APPLICATION

(11) **EP 4 806 572 A1**
(43) Date of publication of application: **16.09.2026**
(21) Application number: 24888263.1
(22) Date of filing: 31.01.2024
(51) Int. Cl.: B23D 19/06

(54) **CUTTING DEVICE, CUTTING METHOD, AND MULTILAYER MATERIAL**

(30) Priority: 06.11.2023 JP 2023189475
(71) Applicant: Nippon Steel Corporation, Tokyo 100-8071 (JP)
(72) Inventor: YAMASHITA, Satoru, Tokyo 100-8071 (JP); NISHIJIMA, Shinnosuke, Tokyo 100-8071 (JP); TAKEDA, Naoki, Tokyo 100-8071 (JP)
(74) Representative: Zimmermann & Partner Patentanwälte mbB
(86) International application number: PCT/JP2024/002985
(87) International publication number: WO 2025/099960

(57) **Abstract**

A cutting apparatus for cutting a workpiece sandwiched in a first direction, wherein a first tool 110 and a second tool 120 are disposed in a first direction so as to face each other, a blade portion 110a of the first tool and a blade portion 120a of the second tool each include a pressing surface S1 perpendicular to the first direction and a first vertical wall surface S2 perpendicular to the pressing surface S1, at least any one of the blade portion 110a of the first tool and the blade portion 120a of the second tool includes a tool inclined surface S3 between the pressing surface S1 and the first vertical wall surface S2, an angle between the pressing surface S1 and the tool inclined surface S3 is an obtuse angle, and a clearance C [mm] between the first tool 110 and the second tool 120 and a distance d [mm] between the pressing surfaces S1 satisfy a formula (A) below: $n < C / d < m$ where, n = 0.3 + (-0.15) × (1-cos4θ), m = 0.4, where, θ [°] is an inclination angle of the tool inclined surface S3 with respect to the first direction.

## Description

### TECHNICAL FIELD

The present invention relates to a cutting apparatus for cutting a workpiece, a cutting method, and a multi-layered material including a cut end surface.

### BACKGROUND ART

A multi-layered material formed by coating surfaces of a base material with a coating material, such as a plated steel sheet in which surfaces of a steel sheet are subjected to plating treatment or a coated steel sheet in which surfaces of a steel sheet are coated, is produced and used in accordance with its application. For example, in a case of a plated steel sheet used as a construction material, an automobile, or a home appliance, the reason for coating the base material with the coating material is to have a better corrosion resistance with the coating material (plating) than a state of the base material (the steel sheet) as it is. However, a process of producing a component or the like from a multi-layered material as a starting material includes a step of cutting a needed member from an original sheet, such as shearing or laser cutting. A cut end surface formed by the cutting step includes a shear surface and a rupture surface on which a base material is almost exposed. On a portion of the cut end surface on which the base material is exposed, an effect provided by a coating material is not exerted. For example, in a case where the multi-layered material is a plated steel sheet, an advantageous effect of improving corrosion resistance by the plating cannot be provided on the portion of the cut end surface on which the base material is exposed, and there is a concern about occurrence of red rust.

For this reason, even in a case of a component made of a multi-layered material as a starting material, to develop an effect provided by a coating material on a cut end surface as with front and back surfaces coated with the coating material, it is generally necessary to subject the cut end surface after machining to after-machining repair (in a case of plating, application of paint containing a principal component of the plating, etc.). This is laborious and costly. Thus, a technique has been studied, which makes, in cutting a multi-layered material, a large amount of a coating material is dragged onto a cut end surface, so as to exert an effect provided by the coating material on the cut end surface as with front and back surfaces.

For example, Patent Document 1 discloses a cutting apparatus for cutting a multi-layered material sandwiched between a first tool and a second tool. In the cutting apparatus, the first tool and the second tool are disposed such that blade portions of the first tool and the second tool face each other in a pressing direction, at least any one of the blade portions of the first tool and the second tool includes: an inclined portion including a tool inclined surface that is inclined with respect to the pressing direction; and a protruding portion including a vertical wall surface and a pressing surface and protruding from the inclined portion in the pressing direction, the vertical wall surface extending from the tool inclined surface along the pressing direction, the pressing surface being perpendicular to the vertical wall surface, and the inclined portion overlaps a tool facing the inclined portion as viewed in the pressing direction.

### LIST OF PRIOR ART DOCUMENT

### PATENT DOCUMENT

Patent Document 1: WO2023/058341

### SUMMARY OF INVENTION

### TECHNICAL PROBLEM

However, in a multi-layered material cut by the cutting apparatus described in Patent Document 1, a rupture surface of a cut end surface is apparent along the sheet thickness direction (Figure 10A and Figure 10B of Patent Document 1). Consequently, the rupture surface is viewable when the cut end surface of the multi-layered material is viewed in a direction perpendicular to the sheet thickness direction. The rupture surface is a bare metal-exposed area without being coated with a coating material and is more prone to rust and the like compared to other parts. That is, leaving the rupture surface of a cut end surface apparent along the sheet thickness direction may not be preferable in terms of aesthetics in some cases.

The present invention has thus been made in view of the problems described above, and an objective of the present invention is to provide a cutting apparatus, a cutting method, and multi-layered material that can exert the effect provided by a coating material on a cut end surface as much as on front and back surfaces and allow a rupture surface of a cut end surface to be located in a less visible portion.

### SOLUTION TO PROBLEM

According to an aspect of the present invention in order to achieve the above-mentioned object, there is provided a cutting apparatus for cutting a workpiece sandwiched between a first tool and a second tool in a first direction, wherein the first tool and the second tool are disposed such that blade portions of the first tool and the second tool face each other in the first direction, the blade portion of the first tool and the blade portion of the second tool each include a pressing surface perpendicular to the first direction and a first vertical wall surface perpendicular to the pressing surface, at least any one of the blade portion of the first tool and the blade portion of the second tool includes a tool inclined surface that is inclined with respect to the first direction between the pressing surface and the first vertical wall surface and an angle between the pressing surface and the tool inclined surface is an obtuse angle, and a clearance C [mm] between the first tool and the second tool and a distance d [mm] between the pressing surfaces when both the pressing surface of the first tool and the pressing surface of the second tool come into contact with a workpiece that is to be cut satisfy a formula (A) below: $n < C / d < m$ where, n = 0.3 + (-0.15) × (1-cos4θ), m = 0.4, where, θ [°] is an inclination angle of the tool inclined surface with respect to the first direction.

The inclination angle θ may be 15° or more to 45° or less.

Each of the first tool and the second tool may include the tool inclined surface.

Shapes of the first tool and the second tool may be symmetric.

At least any one of the blade portion of the first tool and the blade portion of the second tool may include a second vertical wall surface perpendicular to the pressing surface between the pressing surface and the tool inclined surface, and the formula (A) is satisfied when n = 0.3 + (0.0625x-0.15) × (1-cos4θ), m = 0.4, where, x [mm] is a length of the second vertical wall surface in the first direction.

The length x of the second vertical wall surface may be 0.1 mm or more to 0.8 mm or less.

According to another aspect of the present invention, to solve the problems, there is provided a cutting method for cutting a workpiece sandwiched between a first tool and a second tool in a first direction, wherein a blade portion of the first tool and a blade portion of the second tool each include a pressing surface perpendicular to the first direction and a first vertical wall surface perpendicular to the pressing surface, at least any one of the blade portion of the first tool and the blade portion of the second tool includes a tool inclined surface that is inclined with respect to the first direction between the pressing surface and the first vertical wall surface, and an angle between the pressing surface and the tool inclined surface is an obtuse angle, and wherein the method comprises sandwiching a workpiece between the first tool and the second tool and performing cutting such that a clearance C [mm] between the first tool and the second tool and a distance d [mm] between the pressing surfaces when both the pressing surface of the first tool and the pressing surface of the second tool come into contact with the workpiece that is to be cut satisfy a formula (A) below: $n < C / d < m$ where, n = 0.3 + (-0.15) × (1-cos4θ), m = 0.4, where, θ [°] is an inclination angle of the tool inclined surface with respect to the first direction.

At least any one of the blade portion of the first tool and the blade portion of the second tool may include a second vertical wall surface perpendicular to the pressing surface between the pressing surface and the tool inclined surface, and the method may include sandwiching a workpiece between the first tool and the second tool and performing cutting such that the clearance C [mm] between the first tool and the second tool and the distance d [mm] between the pressing surfaces when both the pressing surface of the first tool and the pressing surface of the second tool come into contact with the workpiece that is to be cut satisfy the formula (A) when n = 0.3 + (0.0625x-0.15) × (1-cos4θ), m = 0.4, where, x [mm] is a length of the second vertical wall surface in the first direction.

Furthermore, according to still another aspect of the present invention, to solve the problems, there is provided a multi-layered material formed by coating surfaces of a base material with a coating material, the multi-layered material including a cut end surface that extends along a sheet thickness direction from a first surface toward a second surface, wherein the cut end surface includes an inclined surface, a vertical wall surface, and a rupture surface in this order, the inclined surface being inclined with respect to the sheet thickness direction from the first surface, the vertical wall surface being continued from the inclined surface and along the sheet thickness direction, the rupture surface connecting the vertical wall surface and the second surface, or includes an inclined surface and a rupture surface in this order, the inclined surface being inclined with respect to the sheet thickness direction from the first surface, the rupture surface connecting the inclined surface and the second surface, at least part of the inclined surface is coated with the coating material that is continued from the first surface, and at least part of the rupture surface is along the second surface.

A length of the rupture surface in a sheet width direction may be 30% or less of the sheet thickness of the multi-layered material.

The first surface may intersect with inclined surface, and an internal angle between the first surface and the inclined surface may be an obtuse angle.

The rupture surface may include a first rupture surface and a second rupture surface, and the first rupture surface and the second rupture surface may intersect with each other.

An intersection angle of the first rupture surface and the second rupture surface may be less than 90°.

The coating material may be made of Zn, Al, or an alloy of Zn and Al.

The base material may be a steel sheet.

### ADVANTAGEOUS EFFECTS OF INVENTION

As described above, according to the present invention, it is possible to exert the effect provided by a coating material on a cut end surface as much as on front and back surfaces and allow a rupture surface of a cut end surface to be located in a less visible portion.

### BRIEF DESCRIPTION OF DRAWINGS

[Figure 1] Figure 1 is a schematic diagram illustrating a configuration example of a slitting facility that includes a slitting apparatus, which is an example of a cutting apparatus according to an embodiment of the present invention, the upper side of which illustrates a plan view and the lower side illustrates a side view.
[Figure 2] Figure 2 is a schematic diagram illustrating a configuration example of the slitting apparatus according to the embodiment.
[Figure 3] Figure 3 is a sectional view of the slitting apparatus illustrated in Figure 2 taken along the cutting line I-I.
[Figure 4] Figure 4 is a partially enlarged view of an upper rotary part and a lower rotary part of the slitting apparatus according to the embodiment, illustrating a case where a pair of slitting blade portions have different shapes.
[Figure 5] Figure 5 is a partially enlarged view of an upper rotary part and a lower rotary part of the slitting apparatus according to the embodiment, illustrating a case where a pair of slitting blade portions have shapes that are vertically symmetrical to each other.
[Figure 6] Figure 6 is a schematic diagram illustrating how cutting is performed when a first slitting blade and a second slitting blade are both right-angled blades.
[Figure 7] Figure 7 is a schematic diagram illustrating a cut end surface of a plated steel sheet after being cut with the pair of slitting blades illustrated in Figure 6.
[Figure 8] Figure 8 is a schematic diagram illustrating how cutting is performed when the first slitting blade has a blade portion of a cutting edge cross-sectional profile A and the second slitting blade is a right-angled blade.
[Figure 9] Figure 9 is a schematic diagram illustrating how cutting is performed when a first slitting blade and a second slitting blade each include a blade portion of a cutting edge cross-sectional profile A.
[Figure 10] Figure 10 is a schematic diagram illustrating an example of a cut end surface of a plated steel sheet after being cut with the pair of slitting blades illustrated in Figure 8 or Figure 9.
[Figure 11] Figure 11 is a schematic diagram illustrating another example of the cut end surface of the plated steel sheet after being cut with the pair of slitting blades illustrated in Figure 8 or Figure 9.
[Figure 12] Figure 12 is a schematic diagram illustrating how cutting is performed when the first slitting blade has a blade portion of a cutting edge cross-sectional profile B and the second slitting blade is a right-angled blade.
[Figure 13] Figure 13 is a schematic diagram illustrating how cutting is performed when both the first slitting blade and the second slitting blade have blade portions of the cutting edge cross-sectional profile B.
[Figure 14] Figure 14 is a schematic diagram illustrating an example of a cut end surface of a plated steel sheet after being cut by a pair of slitting blades illustrated in Figure 12 or Figure 13.
[Figure 15] Figure 15 is a schematic diagram illustrating another example of a cut end surface of a plated steel sheet after being cut by a pair of slitting blades illustrated in Figure 12 or Figure 13.
[Figure 16] Figure 16 is a diagram illustrating results of simulation of Inventive example 5, Inventive example 13, Comparative example 3, and Comparative example 6 as Example.
[Figure 17] Figure 17 is a schematic diagram illustrating an example of a blade portion of a punch (a tool) of pieces of pressing press tooling.
[Figure 18] Figure 18 is a schematic diagram illustrating an example of a blade portion of a shear (a tool) of a shear cutting machine.

### DESCRIPTION OF EMBODIMENTS

A preferred embodiment of the present invention will be described below in detail with reference to the accompanying drawings. In the present specification and drawings, components having substantially the same functions and structures are denoted by the same reference characters, and the repeated description thereof will be omitted.

### [1. Cutting Apparatus]

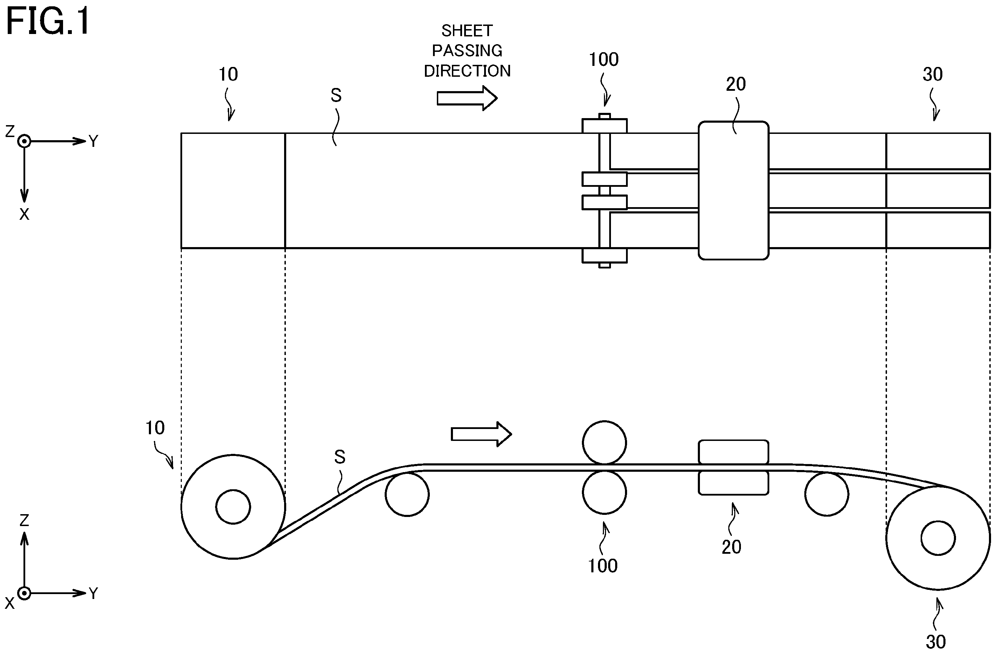

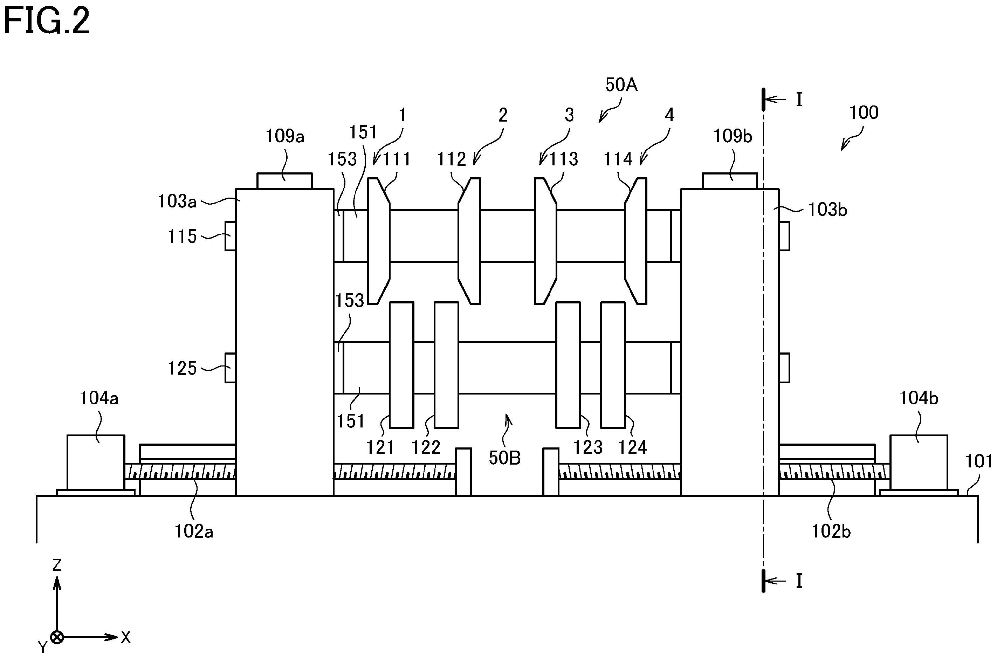

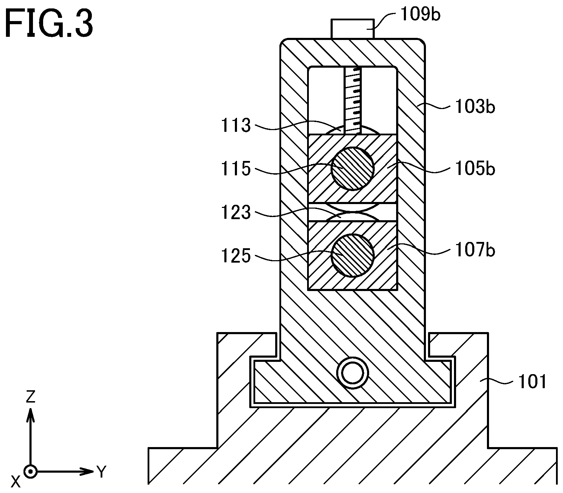

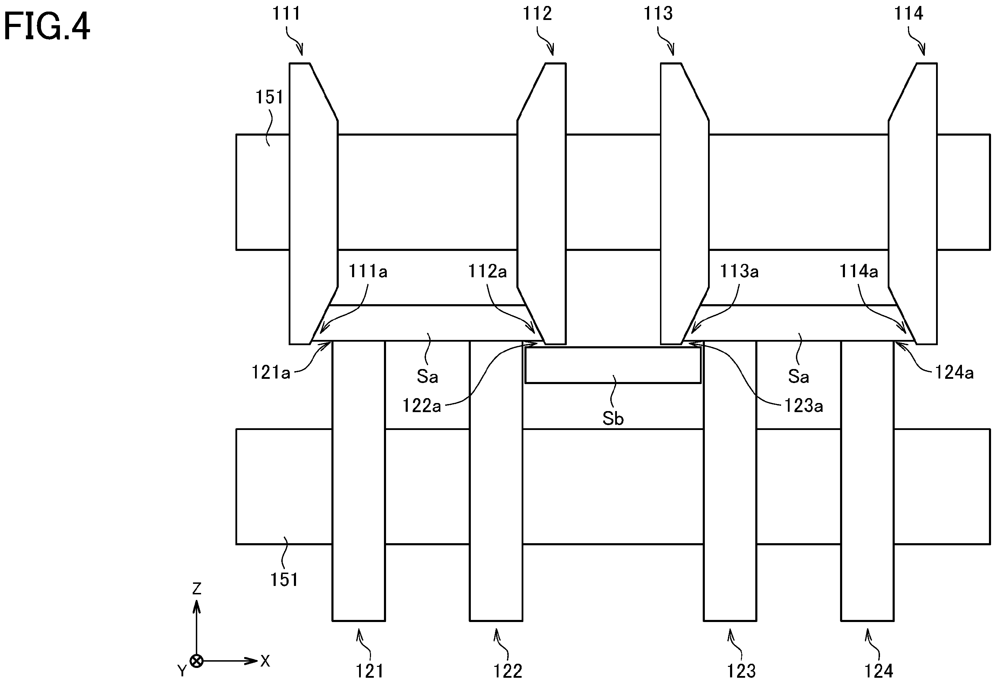

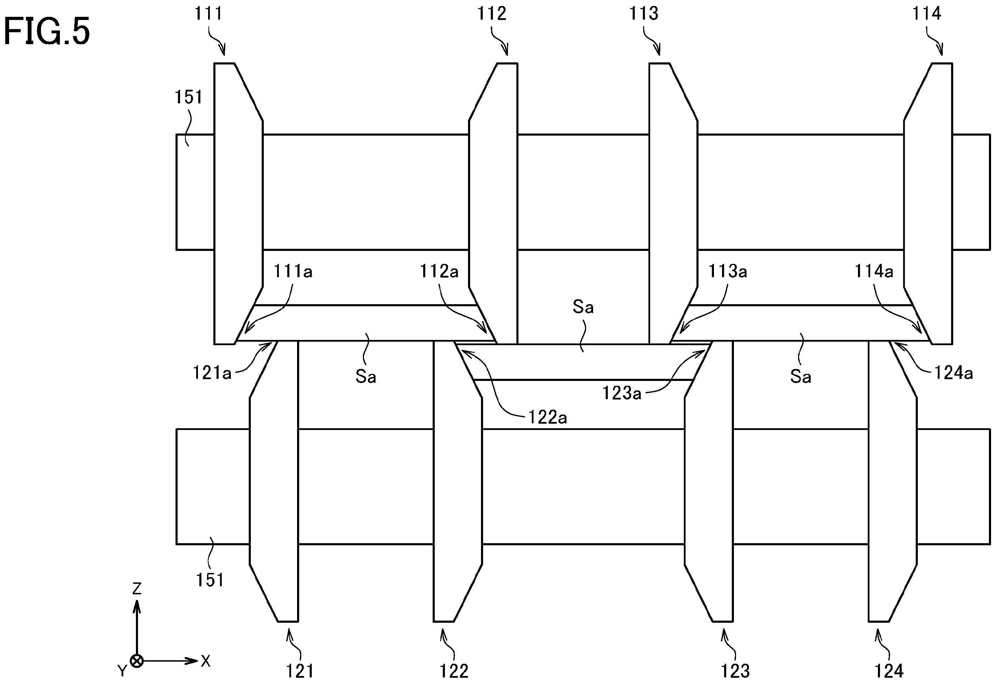

First, based on Figure 1 to Figure 5, a schematic configuration of a cutting apparatus according to an embodiment of the present invention will be described. Figure 1 is a schematic diagram illustrating a configuration example of a slitting facility that includes a slitting apparatus 100, which is an example of a cutting apparatus according to the present embodiment, where its upper side is a plan view, and its lower side is a side view. Figure 2 is a schematic diagram illustrating a configuration example of the slitting apparatus 100 according to the present embodiment. Figure 3 is a sectional view of the slitting apparatus 100 illustrated in Figure 2 taken along the cutting line I-I. Figure 4 is a partially enlarged view of an upper rotary part 50A and a lower rotary part 50B of the slitting apparatus 100 according to the present embodiment, illustrating a case where a pair of slitting blade portions have different shapes. Figure 5 is a partially enlarged view of an upper rotary part 50A and a lower rotary part 50B of the slitting apparatus 100, illustrating a case where a pair of slitting blade portions have shapes that are vertically symmetrical to each other.

Note that Figure 4 and Figure 5 each illustrate only halves of the upper rotary part 50A and the lower rotary part 50B from rotation centers of the upper rotary part 50A and the lower rotary part 50B. In the following description, as an example of a multi-layered material that is to be cut by the slitting apparatus 100, a plated steel sheet S in which surfaces of a steel sheet being a base material are coated with plating that is a coating material will be mentioned. In Figure 1 to Figure 5, for the description, a sheet length direction of the plated steel sheet S is taken as an X direction, a sheet width direction of the plated steel sheet S is taken as a Y direction, and a sheet thickness direction is taken as a Z direction. The Y direction is also a strip running direction of the plated steel sheet S. The Z direction also indicates a direction in which the plated steel sheet S is sandwiched between tools (slitting blades). The direction in which the plated steel sheet S is sandwiched between tools (slitting blades) is also referred to as "first direction". In addition, the direction in which the tools (slitting blades) of the pair face each other is also referred to as "second direction". The second direction is perpendicular to the first direction.

The slitting facility is a facility that cuts the plated steel sheet S that is to be cut with the slitting apparatus 100 that includes a pair of rotary blade portions. As illustrated in Figure 1, the slitting facility includes, for example, a pay-off reel 10, a tension generating device 20, a tension reel 30, and the slitting apparatus 100. The plated steel sheet S wound in a coil shape is unreeled from the pay-off reel 10. Between the pay-off reel 10 and the tension generating device 20, the plated steel sheet S is cut under tension by shear force with the slitting apparatus 100. The slitting apparatus 100 illustrated in Figure 1 divides the plated steel sheet S into three pieces in a width direction. The plated steel sheet S cut by the slitting apparatus 100 is wound in a coil shape by the tension reel 30.

As illustrated in Figure 2, the slitting apparatus 100 includes, for example, four pairs of slitting blades 1, 2, 3, and 4. Note that it suffices that the slitting apparatus 100 includes at least one pair of slitting blades. The pairs of slitting blades 1, 2, 3, and 4 respectively include first slitting blades 111, 112, 113, and 114 that are first tools and second slitting blades 121, 122, 123, and 124 that are second tools. As illustrated in Figure 4, the first slitting blades 111, 112, 113, and 114 and the second slitting blades 121, 122, 123, and 124 that form the pairs are disposed such that they face each other in the first direction (Z direction) in which the plated steel sheet S is sandwiched.

The first slitting blades 111, 112, 113, and 114 and the second slitting blades 121, 122, 123, and 124 illustrated in Figure 2 and Figure 4 are different in shape from each other, respectively. In front view, the blade portions 111a, 112a, 113a, and 114a of the first slitting blades 111, 112, 113, and 114 each include a pressing surface perpendicular to the first direction (Z direction), a first vertical wall surface perpendicular to the pressing surface, and a tool inclined surface that is inclined with respect to the first direction (Z direction) between the pressing surface and the first vertical wall surface. In contrast, each of the blade portions 121a, 122a, 123a, and 124a of the second slitting blades 121, 122, 123, and 124 is a right-angled blade having a corner portion with a substantially right angle and composed of a pressing surface perpendicular to the first direction (Z direction) and a first vertical wall surface perpendicular to the pressing surface.

Note that, as illustrated in Figure 2 and Figure 4, it suffices for the slitting apparatus 100 that at least any one of the first slitting blades 111, 112, 113, and 114 and the second slitting blades 121, 122, 123, and 124 includes a blade portion that includes the pressing surface, the tool inclined surface, and the first vertical wall surface. For example, as illustrated in Figure 5, each of the first slitting blades 111, 112, 113, and 114 and the second slitting blades 121, 122, 123, and 124 may include a blade portion that includes the pressing surface, the tool inclined surface, and the first vertical wall surface. The shapes of the blade portions of the slitting blades will be described later in detail.

The first slitting blades 111, 112, 113, and 114 are supported by a first shaft part 115 at their rotation centers. The second slitting blades 121, 122, 123, and 124 are supported by a second shaft part 125 at their rotation centers. As illustrated in Figure 3, the first shaft part 115 and the second shaft part 125 are rotatably supported by a pair of support parts 103a and 103b at both ends of the first shaft part 115 and the second shaft part 125 via chocks 105a and 105b and chocks 107a and 107b, respectively (chocks 105a and 107a, which are behind the paper, are not illustrated). The pair of support parts 103a and 103b are provided on a base 101 illustrated in Figure 2.

Between the support parts 103a and 103b, sleeves 151 and 153 may be provided together with the first slitting blades 111, 112, 113, and 114 and the second slitting blades 121, 122, 123, and 124. The sleeves 151 and 153 are members for adjusting distances between the first slitting blades 111, 112, 113, and 114 and distances between the second slitting blades 121, 122, 123, and 124 (i.e., clearance described later). In Figure 2, the sleeves 151 and 153 having different widths are provided. However, only sleeves having the same width may be used to adjust the distances between the first slitting blades 111, 112, 113, and 114 and the distances between the second slitting blades 121, 122, 123, and 124.

Hereinafter, the first slitting blades 111, 112, 113, and 114 and the sleeves 151 and 153 supported by the first shaft part 115 will be also referred to as the upper rotary part 50A. In addition, the second slitting blades 121, 122, 123, and 124 and the sleeves 151 and 153 supported by the second shaft part 125 will be also referred to as the lower rotary part 50B. The upper rotary part 50A rotates integrally with the first shaft part 115. The lower rotary part 50B rotates integrally with the second shaft part 125.

The pair of support parts 103a and 103b are each movable in the sheet width direction (the X direction) by driving units 104a and 104b. For example, as illustrated in Figure 2, the pair of support parts 103a and 103b are in threaded engagement with thread parts 102a and 102b that are set parallel to the first shaft part 115 and the second shaft part 125. The thread parts 102a and 102b have one ends connected to the driving units 104a and 104b, respectively. By driving the driving units 104a and 104b to rotate the thread parts 102a and 102b, the support parts 103a and 103b are caused to move.

By driving the driving units 104a and 104b to move the support parts 103a and 103b in the sheet width direction such that the support parts 103a and 103b are separated from each other, one ends of the first shaft part 115 and the second shaft part 125 come off from the chocks. Thus, the sleeves 151 and 153, the first slitting blades 111, 112, 113, and 114, and the second slitting blades 121, 122, 123, and 124 can be detached from the first shaft part 115 and the second shaft part 125, and the slitting blades or the sleeves for adjusting the distances between the slitting blades can be changed.

On top of the support parts 103a and 103b, pressing-down devices 109a and 109b are provided as distance adjusting units that adjust the distance between the first slitting blades 111, 112, 113, and 114 and the second slitting blades 121, 122, 123, and 124 respectively. By tightening the pressing-down devices 109a and 109b, the distance between the first slitting blades 111, 112, 113, and 114 and the second slitting blades 121, 122, 123, and 124 can be narrowed.

In the slitting apparatus 100 according to the present embodiment, the distance between the first slitting blades 111, 112, 113, and 114 and the second slitting blades 121, 122, 123, and 124 is adjusted by pressing-down devices 109a and 109b in accordance with a sheet thickness of the plated steel sheet S. Then, the plated steel sheet S is made to pass between the upper rotary part 50A and the lower rotary part 50B while the upper rotary part 50A and the lower rotary part 50B are rotating, and thus the plated steel sheet S is cut. When the plated steel sheet S passes between the upper rotary part 50A and the lower rotary part 50B, the pairs of slitting blades 1, 2, 3, and 4 are gradually pressed in the first direction (the Z direction) and cut the plated steel sheet S with shear force.

At this time, a tensile force produced between the plated steel sheet S, and edges of the first slitting blades 111, 112, 113, and 114 and edges of the second slitting blades 121, 122, 123, and 124 makes plating layers on surfaces of the plated steel sheet S are dragged onto cut end surfaces, and the cut end surfaces are coated with the plating layers. That is, the plating layers on the surfaces of the plated steel sheet S are made to follow movements of the blade portions 111a, 112a, 113a, and 114a of the first slitting blades 111, 112, 113, and 114 and the blade portions 121a, 122a, 123a, and 124a of the second slitting blades 121, 122, 123, and 124 with respect to the plated steel sheet S passing through the upper rotary part 50A and the lower rotary part 50B, and the plating layers are made to be dragged onto the cut end surfaces. In this manner, the cut end surfaces of the plated steel sheet S are coated with the plating layers.

A configuration of the slitting apparatus 100 according to the present embodiment and slitting facility including the slitting apparatus 100 is described above. Note that, in the following description, the first slitting blades 111, 112, 113, and 114 corresponding to the first tool will be referred to as "first slitting blade 110", and the second slitting blades 121, 122, 123, and 124 corresponding to the second tool will be referred to as "second slitting blade 120". Similarly, the blade portions 111a, 112a, 113a, and 114a of the first slitting blade, which correspond to blade portions of the first tool will be referred to as "blade portion 110a", and the blade portions 121a, 122a, 123a, and 124a of the second slitting blade, which correspond to blade portions of the second tool will be referred to as "blade portion 120a".

### [2. Coating Cut End Surface with Coating Material]

A component made of a multi-layered material is produced by, for example, cutting the multi-layered material with a cutting apparatus and then machined. At this time, a state of a cut end surface of the multi-layered material differs in accordance with a shape of a blade of the cutting apparatus for cutting the multi-layered material. Hereinafter, a state of cut end surfaces of a plated steel sheet 5 being cut, which is an example of the multi-layered material, will be described.

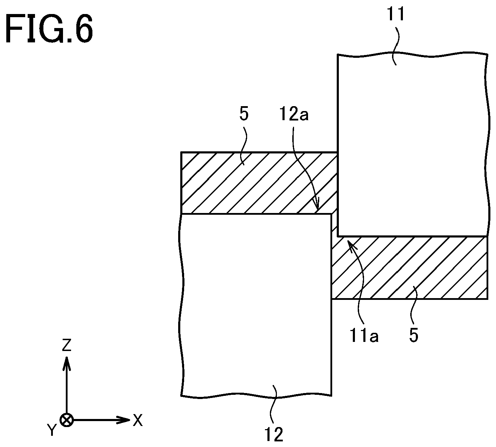

For example, as illustrated in Figure 6, assume that a blade portion 11a of a first slitting blade 11 and a blade portion 12a of a second slitting blade 12 both have right-angled blades composed of a pressing surface and a first vertical wall surface in the slitting apparatus 100 illustrated in Figure 2. At this time, when the first slitting blade 11 and the second slitting blade 12 sandwich and are pressed against the plated steel sheet 5 in which an upper surface (first surface) and a lower surface (second surface) of a base material 5a being a steel sheet are coated with plating layers 5b, shear force is applied to the plated steel sheet 5 and cuts the plated steel sheet 5.

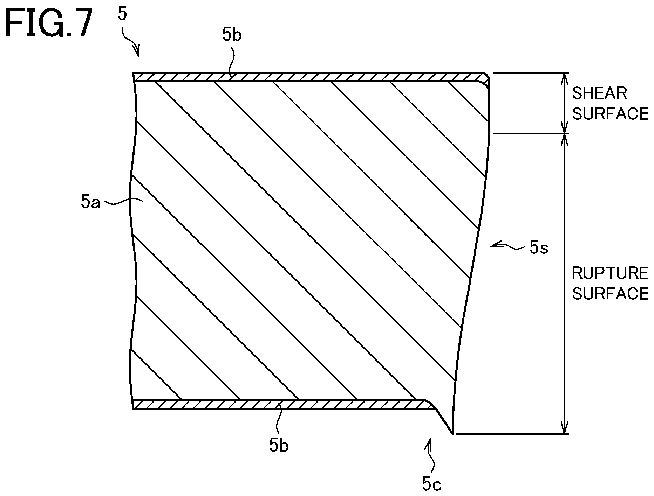

At this time, as illustrated in Figure 7, a cut end surface 5s includes a shear surface and a rupture surface in this order from the upper surface. The shear surface is a smooth surface that is formed by a movement of the first slitting blade 11 pressing into the plated steel sheet 5, and the rupture surface is a surface made by a rupture of the plated steel sheet 5 that is started from a crack developing on the plated steel sheet 5. As illustrated in Figure 7, in the cut end surface 5s of the plated steel sheet 5, the plating layer 5b little remains on the shear surface, and the base material 5a is exposed on the rupture surface. Therefore, an effect provided by the plating being the coating material is not exerted on such a cut end surface 5s, and there is a concern about occurrence of red rust on the cut end surface 5s. In addition, the rupture surface is along the sheet thickness direction, and therefore, a rusted rupture surface is visible when the cut end surface is viewed from a direction perpendicular to the sheet thickness direction, which may not be preferable in terms of aesthetics in some cases.

As described above, cutting with a right-angled blade as illustrated in Figure 6 produces a small shear surface, which results in a small amount of the plating dragged from the upper surface and the lower surface onto the cut end surface until the plated steel sheet 5 is cut. In addition, stresses concentrate at corner portions of upper and lower tools, and a crack develops in such a manner as to connect the corner portions, making a cutting timing earlier and resulting in a large exposure region of the base material 5a (i.e., the rupture surface). Furthermore, since the rupture surface is located in a visible portion, it catches the eye in situations such as when the rupture surface is rusted.

Thus, the inventors of the present application conducted diligent studies and have conceived of providing a tapered inclined surface (tool inclined surface) to at least any one of the blade portion 110a of the first slitting blade 110 and the blade portion 120a of the second slitting blade 120 and increasing a clearance between the blade portion 110a of the first slitting blade 110 and the blade portion 120a of the second slitting blade 120. Using such tools makes it possible to increase the plating coverage on the cut end surface 5s of the plated steel sheet 5 and locate the rupture surface, which is to be a bare metal-exposed area, along a surface of the plated steel sheet 5. That is, the rupture surface of the plated steel sheet 5 cut by such tools is along a direction perpendicular to the sheet thickness direction, instead of along the sheet thickness direction.

At the time when the plated steel sheet 5 cut by the slitting apparatus 100 described above is turned into a product, when the first surface is located in a viewable position, the rupture surface, which is to be a bare metal-exposed area, is inconspicuous because it is located along the second surface. In addition, since the rupture surface is located along the second surface, the rupture surface is less likely to be exposed in a corrosive environment than the case in which the rupture surface is along the sheet thickness direction, so that occurrence of rust can be prevented. In the following, two cutting edge cross-sectional profiles and the shape of a plated steel sheet cut by tools including the blade portions will be described.

### [2-1. Cutting edge cross-sectional profile A: Cutting by Blade Portion having Tool Inclined Surface]

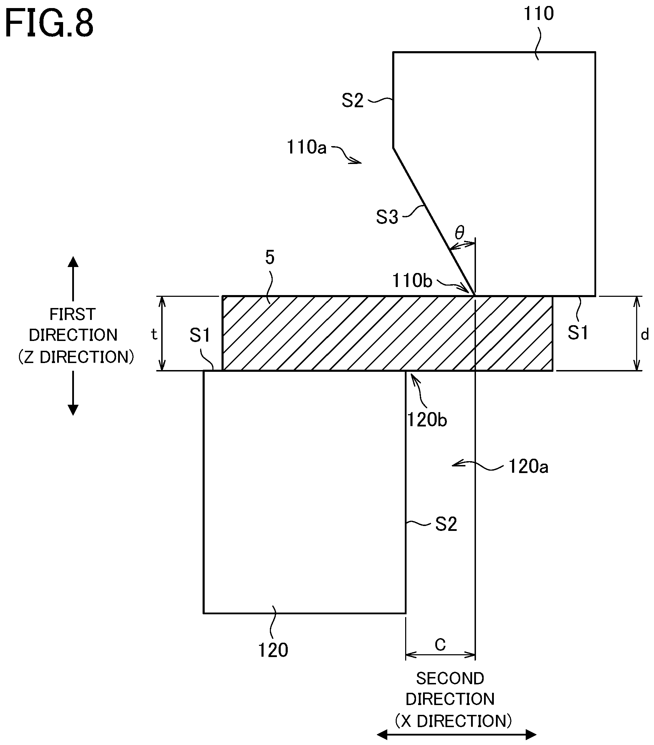

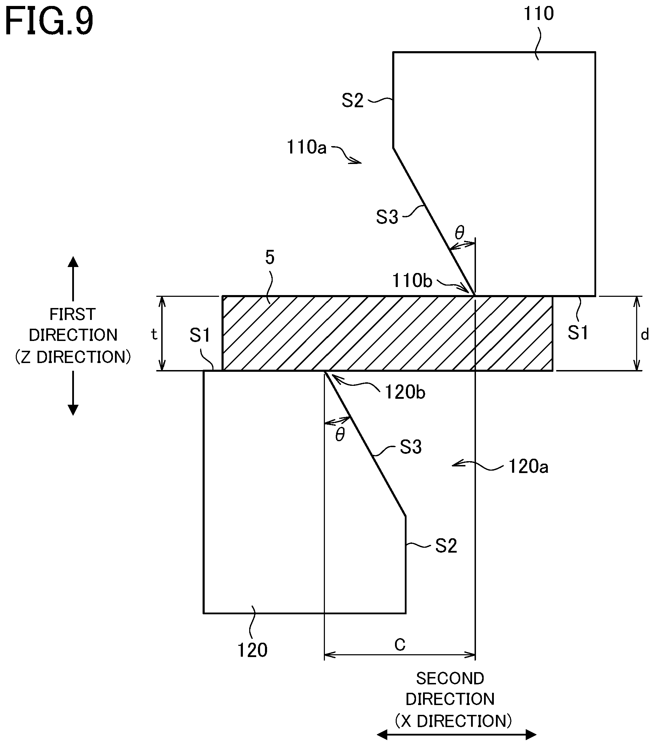

For example, as illustrated in Figure 8, the blade portion 110a of the first slitting blade 110 is shaped such that it has a pressing surface S1, a first vertical wall surface S2 perpendicular to the pressing surface S1, and a tool inclined surface S3 that is inclined with respect to the first direction between the pressing surface S1 and the first vertical wall surface S2 (also referred to as "cutting edge cross-sectional profile A"). At this time, the blade portion 120a of the second slitting blade 120 may be a right-angled blade composed of the pressing surface S1 and the first vertical wall surface S2. Furthermore, for example, as illustrated in Figure 9, both the blade portion 110a of the first slitting blade 110 and the blade portion 120a of the second slitting blade 120 may have the cutting edge cross-sectional profile A that has the pressing surface S1, the first vertical wall surface S2, and the tool inclined surface S3. Here, the tool inclined surface S3 is inclined with respect to the first direction (Z direction) by θ [°]. The angle between the pressing surface S1 and the tool inclined surface S3 is an obtuse angle (90°+θ).

In both cases illustrated in Figure 8 and Figure 9, the first slitting blade 110 and the second slitting blade 120 are arranged such that the formula (1) below is satisfied. Note that, n = 0.3 + (-0.15) × (1-cos4θ), m = 0.4.
$n < C / d < m$

C [mm] is a clearance between the blade portion 110a of the first slitting blade 110 and the blade portion 120a of the second slitting blade 120, and d [mm] is a distance between the pressing surfaces when both the pressing surface S1 of the first slitting blade 110 and the pressing surface S1 of the second slitting blade 120 come into contact with the plated steel sheet 5 that is to be cut. The clearance C is a distance between an edge 110b of the blade portion 110a of the first slitting blade 110 and an edge 120b of the blade portion 120a of the second slitting blade 120. Note that, in the second direction in which the first slitting blade 110 and the second slitting blade 120 of a pair face each other, the edges 110b and 120b are located on the pressing surfaces S1 at ends on other tool sides. In addition, the distance d between the pressing surfaces corresponds to a sheet thickness t of the plated steel sheet 5 that is to be cut.

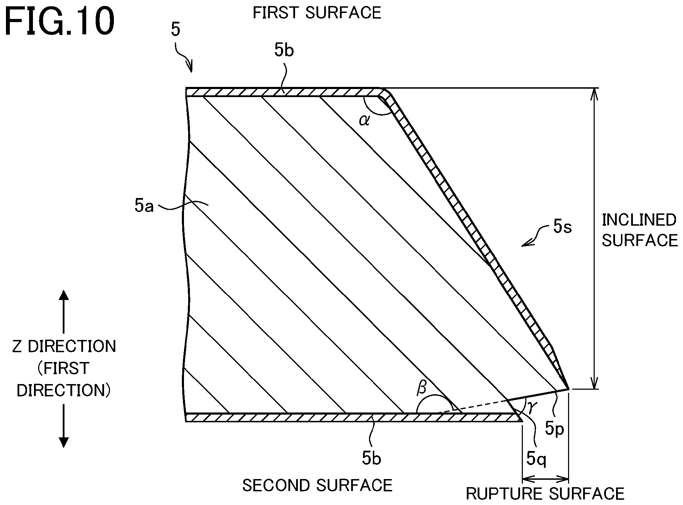

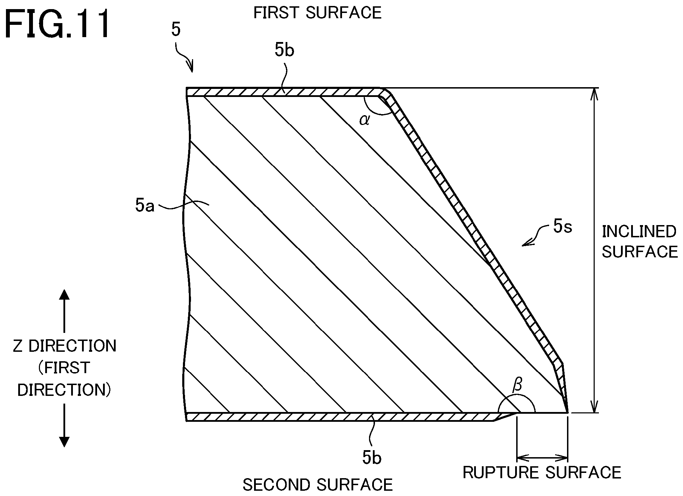

Figure 10 and Figure 11 illustrate examples of the cut end surface 5s of the plated steel sheet 5 cut by pairs of slitting blades illustrated in Figure 8 and Figure 9. Note that Figure 10 and Figure 11 illustrate the cut end surfaces 5s on a side on which the tool inclined surfaces S3 of the first slitting blades 110 in Figure 8 and Figure 9 are pressed into surfaces facing the tool inclined surfaces S3 (the upper surfaces, the first surfaces). Figure 10 is a schematic diagram of the cut end surface when the clearance C is 5 to 10% of the distance d between the pressing surfaces S1. Figure 11 is a schematic diagram of the cut end surface when the clearance C is 20% or more of the distance d between the pressing surfaces S1.

As illustrated in Figure 10 and Figure 11, the cut end surfaces 5s each include an inclined surface that is inclined with respect to the sheet thickness direction and a rupture surface connecting the inclined surface and a lower surface (second surface) in this order from the upper surface (first surface).

The inclined surface is a surface formed along the tool inclined surface S3 of the blade portion 110a of the first slitting blade 110 and inclined with respect to the sheet thickness direction. At least part of the inclined surface is coated with the plating layer 5b that is continued from the upper surface (first surface). Th rupture surface is a surface made by a rupture of the plated steel sheet 5 that is started from a crack developing on the plated steel sheet 5. The rupture surface is along a direction (i.e., second direction (X direction)) perpendicular to the sheet thickness direction (i.e., first direction (Z direction)). That is, the rupture surface extends along the second surface.

Increasing the clearance C between the blade portion 110a of the first slitting blade 110 and the blade portion 120a of the second slitting blade 120 to 5% or more of the distance d between the pressing surfaces S1 causes a proportion of the inclined surface to increase so that the start of cutting of the plated steel sheet 5 in the sheet thickness direction is delayed. Then, cutting in the sheet width direction proceeds earlier than in the sheet thickness direction due to a load in the sheet width direction generated as a component force caused by the tool inclined surfaces S3 of the slitting blades. As a result, as illustrated in Figure 10 and Figure 11, the rupture surface will be apparent extending along the second surface.

By arranging the second surface as a sheet back surface, the rupture surface, which is to be a bare metal-exposed area, will be exposed on the second surface and therefore less visible from outside. Accordingly, even if any rust occurs on the rupture surface, it will be inconspicuous. In addition, corrosion resistance better than the case in which the rupture surface is along the sheet thickness direction is expected if it is possible to delay the progression of corrosion on the rupture surface by joining the second surface exposing the rupture surface with other parts or allowing it to be positioned on the indoor side. Furthermore, since the rupture surface is along the second surface, no burr is produced protruding from the second surface. Consequently, it is possible to avoid a facility for subjecting cut plated steel sheets to working such as machining from being damaged due to any burr contacting the facility.

On the plated steel sheet 5 having been cut, the upper surface (the first surface) intersects with the inclined surface. Here, an internal angle α between the upper surface and the inclined surface is an obtuse angle having a size of about an inclination angle (a taper angle) θ + 90° of the inclined surface of the tool described later. The lower surface (the second surface) intersects with the rupture surface. The plated steel sheet 5 is cut obliquely from the upper surface side toward the lower surface side by the tool inclined surface S3 of the blade portion 110a of the first slitting blade 110, and thus the inclined surface is formed on the cut end surface 5s, which is inclined in one direction from the upper surface side toward the lower surface side.

On the cut end surface 5s of the plated steel sheet 5, at least part of the inclined surface is coated with the coating material that is continued from the upper surface (the first surface). For example, on the cut end surface 5s of the plated steel sheet 5 illustrated in Figure 10, the plating layer 5b on the upper surface is dragged onto the inclined surface, and the inclined surface is coated with the plating layer 5b. The inclined surface in Figure 10 is entirely coated with the plating layer 5b continued from the upper surface (the first surface). However, depending on how the steel sheet is cut, the plating layer 5b on the upper surface which is dragged onto the inclined surface may become fragmentary, which makes the inclined surface discontinuously coated with plating layers 5b. In this case as well, the inclined surface includes a portion in which the inclined surface is coated with the plating layer 5b continued from the upper surface (the first surface), and thus, on the cut end surface 5s, it is possible to obtain an effect provided by the plating being a coating material.

On the other hand, the rupture surface is apparent along the sheet width direction, that is, the second surface as described above. As long as the clearance C is small to an extent that the clearance C at the time of cutting between the blade portion 110a of the first slitting blade 110 and the blade portion 120a of the second slitting blade 120 satisfies the above formula (1), the rupture surface is composed of two surfaces of a first rupture surface 5p and a second rupture surface 5q as illustrated in Figure 10. The first rupture surface 5p and the second rupture surface 5q intersect with each other and the intersection angle γ is less than 90°. Then, as the clearance C increases, the rupture surface becomes one surface along the second surface as illustrated in Figure 11.

Furthermore, the length of the rupture surface in the sheet width direction of the plated steel sheet 5 cut by a pair of slitting blades according to the embodiment is desirably 30% or less of the sheet thickness of the plated steel sheet 5, which is a multi-layered material. This makes it possible to reduce the area in which the base material 5a is exposed.

### [2-2. Cutting edge cross-sectional profile B: Cutting by Blade Portion having Tool Inclined Surface and Second Vertical Wall Surface]

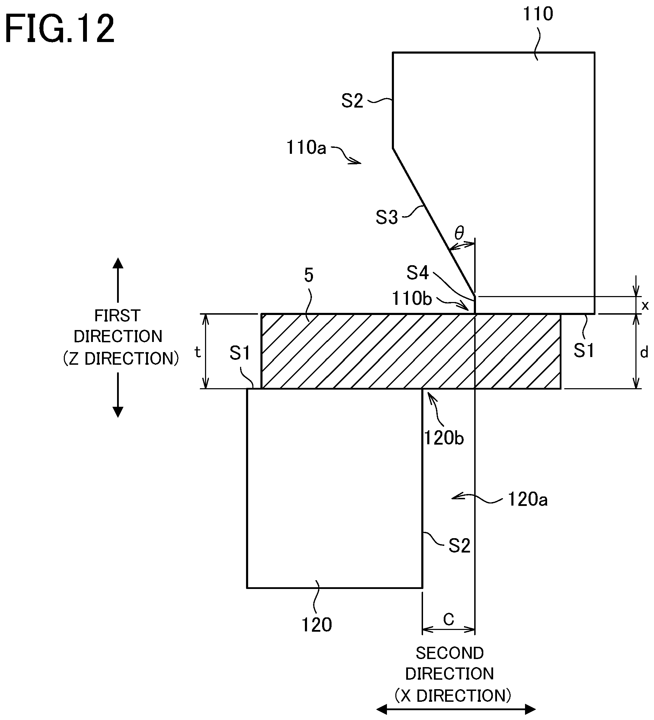

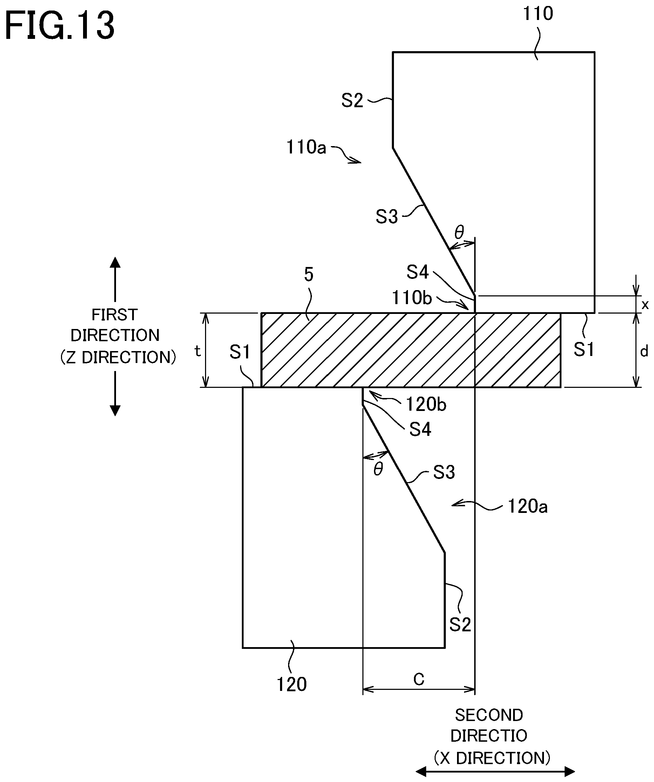

For example, as illustrated in Figure 12, the blade portion 110a of the first slitting blade 110 may be shaped such that it has the pressing surface S1 and the first vertical wall surface S2 perpendicular to the pressing surface S1, and between the pressing surface S1 and the first vertical wall surface S2, the tool inclined surface S3 that is inclined with respect to the first direction from the first vertical wall surface S2, and a second vertical wall surface S4 extending along the first direction between the tool inclined surface S3 and the pressing surface S1 (also referred to as "cutting edge cross-sectional profile B"). As in Figure 8, the blade portion 120a of the second slitting blade 120 may be a right-angled blade composed of the pressing surface S1 and the first vertical wall surface S2. Furthermore, for example, as illustrated in Figure 13, both the blade portion 110a of the first slitting blade 110 and the blade portion 120a of the second slitting blade 120 may have a cutting edge cross-sectional profile B that has the pressing surface S1, the first vertical wall surface S2, the tool inclined surface S3, and the second vertical wall surface S4. Here, the tool inclined surface S3 is inclined with respect to the first direction (Z direction) by θ [°]. The angle between the pressing surface S1 and the tool inclined surface S3 is an obtuse angle (90°+θ).

In both cases illustrated in Figure 12 and Figure 13, the first slitting blade 110 and the second slitting blade 120 are arranged such that the above formula (1) is satisfied. Note that when both the slitting blades 110 and 120 have the second vertical wall surface S4, n = 0.3 + (0.0625x-0.15) × (1-cos4θ), m = 0.4. x [mm] is a length of the second vertical wall surface in the first direction. Note that the case in which x = 0 corresponds to the case of the cutting edge cross-sectional profile A. Providing the second vertical wall surface S4 on the blade portions 110a and 120a makes it possible to cut the plated steel sheet 5 without fail.

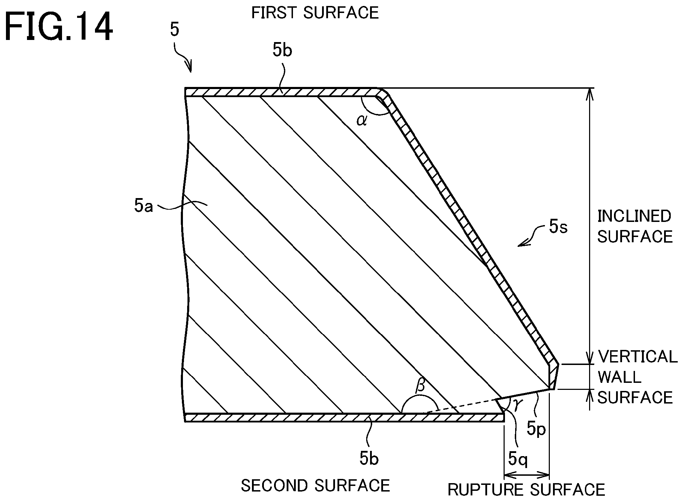

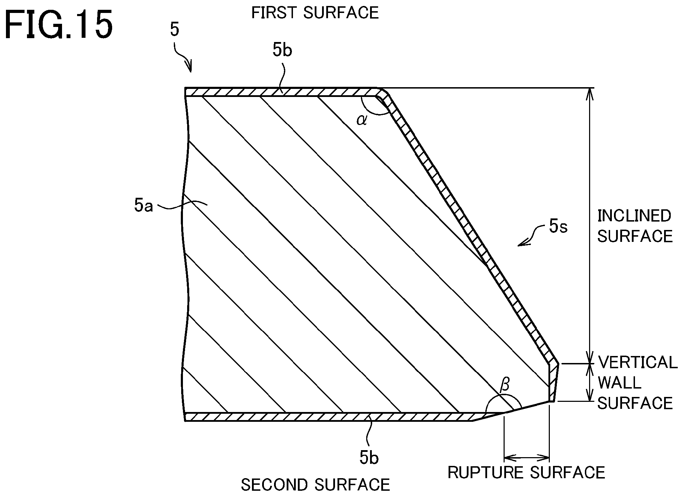

Figure 14 and Figure 15 illustrate examples of the cut end surface 5s of the plated steel sheet 5 cut by pairs of slitting blades illustrated in Figure 12 and Figure 13. Figure 14 and Figure 15 illustrate the cut end surfaces 5s on a side on which the tool inclined surfaces S3 of the first slitting blades 110 in Figure 12 and Figure 13 are pressed into surfaces facing the tool inclined surfaces S3 (the upper surfaces, the first surfaces). Figure 14 is a schematic diagram of the cut end surface when the clearance C is 5 to 10% of the distance d between the pressing surfaces S1. Figure 15 is a schematic diagram of the cut end surface when the clearance C is 20% or more of the distance d between the pressing surfaces S1.

As illustrated in Figure 14 and Figure 15, the cut end surfaces 5s each include an inclined surface that is inclined with respect to the sheet thickness direction, a vertical wall surface that is continued from the inclined surface and is along the sheet thickness direction, and a rupture surface connecting the vertical wall surface and the lower surface (second surface) in this order from the upper surface (first surface).

The inclined surface is a surface formed along the tool inclined surface S3 of the blade portion 110a of the first slitting blade 110 and inclined with respect to the sheet thickness direction. At least part of the inclined surface is coated with the plating layer 5b that is continued from the upper surface (first surface). The vertical wall surface is a surface formed along the second vertical wall surface S4 of the blade portion 110a of the first slitting blade 110. The vertical wall surface is along the sheet thickness direction and is coated with the plating layer 5b that is continued from the inclined surface. The rupture surface is a surface made by a rupture of the plated steel sheet 5 that is started from a crack developing on the plated steel sheet 5. The rupture surface is along a direction (i.e., second direction (X direction)) perpendicular to the sheet thickness direction (i.e., first direction (Z direction)). That is, the rupture surface extends along the second surface.

Even in this case, increasing the clearance C between the blade portion 110a of the first slitting blade 110 and the blade portion 120a of the second slitting blade 120 to 5% or more of the distance d between the pressing surfaces S1 causes a proportion of the inclined surface to increase so that the start of cutting of the plated steel sheet 5 in the sheet thickness direction is delayed. Then, cutting in the sheet width direction proceeds earlier than in the sheet thickness direction due to a load in the sheet width direction generated as a component force caused by the tool inclined surfaces S3 of the slitting blades. As a result, similar to Figure 10 and Figure 11, as illustrated in Figure 14 and Figure 15, the rupture surface will be apparent extending along the second surface.

Accordingly, by arranging the second surface as a sheet back surface, the rupture surface, which is to be a bare metal-exposed area, will be exposed on the second surface and therefore less visible from outside. Accordingly, even if any rust occurs on the rupture surface, it will be inconspicuous. In addition, corrosion resistance better than the case in which the rupture surface is along the sheet thickness direction is expected if it is possible to delay the progression of corrosion on the rupture surface by joining the second surface exposing the rupture surface with other parts or allowing it to be positioned on the indoor side. Furthermore, since the rupture surface is along the second surface, no burr is produced protruding from the second surface. Consequently, it is possible to avoid a facility for subjecting a cut plated steel sheet to working such as machining from being damaged due to any burr contacting the facility.

The shape of cut plated steel sheets 5 illustrated in Figure 14 and Figure 15 is similar to those in Figure 10 and Figure 11 except for the presence of the vertical wall surfaces. That is, the upper surface (first surface) intersects with the inclined surface. An internal angle α between the upper surface and the inclined surface is an obtuse angle having a size of about an inclination angle (a taper angle) θ+90° of the inclined surface of the tool described later. The lower surface (second surface) intersects with the rupture surface. The plated steel sheet 5 is cut obliquely from the upper surface side toward the lower surface side by the tool inclined surface S3 of the blade portion 110a of the first slitting blade 110, and thus the inclined surface is formed on the cut end surface 5s, which is inclined in one direction from the upper surface side toward the lower surface side.

On the cut end surface 5s of the plated steel sheet 5, at least part of the inclined surface and the vertical wall surface is coated with a coating material that is continued from the upper surface (first surface). For example, illustrated in Figure 14, on the cut end surface 5s of the plated steel sheet 5, the plating layer 5b of the upper surface is dragged onto the inclined surface and the vertical wall surface to coat the inclined surface and vertical wall surface. The inclined surface and the vertical wall surface in Figure 14 are entirely coated with the plating layer 5b continued from the upper surface (the first surface). However, depending on how the steel sheet is cut, the plating layer 5b on the upper surface which is dragged onto the inclined surface may become fragmentary, which makes the inclined surface and the vertical wall surface discontinuously coated with plating layers 5b. In this case as well, there are portions in which the inclined surface and the vertical wall surface are coated with the plating layer 5b continued from the upper surface (the first surface), and thus, on the cut end surface 5s, it is possible to obtain an effect provided by the plating, which is a coating material.

On the other hand, the rupture surface is apparent along the sheet width direction, that is, the second surface. As long as the clearance C is small to an extent that the clearance C at the time of cutting between the blade portion 110a of the first slitting blade 110 and the blade portion 120a of the second slitting blade 120 satisfies the above formula (1), the rupture surface is composed of two surfaces of the first rupture surface 5p and the second rupture surface 5q as illustrated in Figure 14. The first rupture surface 5p and the second rupture surface 5q intersect with each other, and the intersection angle γ is less than 90°. Then, as the clearance C increases, the rupture surface becomes one surface along the second surface as illustrated in Figure 11.

Furthermore, the length of the rupture surface in the sheet width direction of the plated steel sheet 5 cut by a pair of slitting blades according to the embodiment is desirably 30% or less of the sheet thickness of the plated steel sheet 5, which is a multi-layered material. This makes it possible to reduce the area in which the base material 5a is exposed.

Note that, as illustrated in Figure 8 and Figure 12, in a case where the blade portion 110a of the first slitting blade 110 has the cutting edge cross-sectional profile A or the cutting edge cross-sectional profile B and the blade portion 120a of the second slitting blade 120 is a right-angled blade composed of the pressing surface S1 and the first vertical wall surface S2, one of two separated pieces of the cut plated steel sheet 5 will have the cut end surface 5s illustrated in Figure 10, Figure 11, Figure 14, or Figure 15 (the post-cut plated steel sheet Sa in Figure 4).

However, the cut end surface 5s of the other plated steel sheet 5 is not coated with the plating. Therefore, the other is scrapped (the post-cut plated steel sheet Sb in Figure 4). As illustrated in Figure 9 or Figure 13, when both the blade portion 110a of the first slitting blade 110 and the blade portion 120a of the second slitting blade 120 have the cutting edge cross-sectional profile A or the cutting edge cross-sectional profile B, both of two separated pieces of the cut plated steel sheet 5 can have the cut end surfaces 5s as illustrated in Figure 10, Figure 11, Figure 14, or Figure 15 (the post-cut plated steel sheet Sa in Figure 5).

### [3. Profile of Tool]

The clearances C between the slitting blades 110 and 120 of pairs according to the embodiment illustrated in Figure 8, Figure 9, Figure 12, and Figure 13 and the cutting edge cross-sectional profile A or cutting edge cross-sectional profile B will now be described in detail. While the first slitting blade 110 is taken to describe the cutting edge cross-sectional profile A and the cutting edge cross-sectional profile B, the same applies to the second slitting blade 120. Note that Figure 8, Figure 9, Figure 12, and Figure 13 illustrate the blade portions 110a in each case where the first slitting blade 110 is cut in a plane that includes the rotation axis of the first slitting blade 110. In addition, in the following, the plated steel sheet 5 will be taken as an example of the multi-layered material that is to be cut for description.

First, the clearance C between the slitting blades 110 and 120 of a pair is made to satisfy the above formula (1). Cutting the plated steel sheet 5 by using such a pair of slitting blades 110 and 120 according to the embodiment allows the rupture surface, which is to be a bare metal-exposed area, to be exposed along the second surface as illustrated in Figure 10, Figure 11, Figure 14, and Figure 15. To this end, it is necessary that the following relationship is satisfied: a penetration depth of the blade at the start of cutting in the sheet width direction (second direction) perpendicular to the sheet thickness direction (first direction) is smaller than a penetration depth of the blade at the end of cutting in the sheet thickness direction (first direction). The start of cutting in the sheet width direction (second direction) is delayed longer as the clearance C increases. That is, when the clearance C is increased, the start of cutting in the first direction, which is the sheet thickness direction, is delayed and cutting in the second direction, which is the sheet width direction, progresses earlier.

On the other hand, as the clearance C increases, it is more difficult to cut the workpiece. Even when the clearance C is increased, it is still possible to cut the plated steel sheet 5 if the sheet thickness t of the plated steel sheet 5 that is to be cut is small. However, a larger sheet thickness t may prevent the plated steel sheet 5 from being cut. Accordingly, a ratio (C/d) of the clearance C to the distance d between the pressing surfaces S, which corresponds to the sheet thickness t of the plated steel sheet 5 that is to be cut, is made to satisfy the above formula (1). This makes it possible to expose the rupture surface of the cut plated steel sheet 5 along the second surface and to cut the plated steel sheet 5 without fail.

The ratio (C/d) of the clearance C to the distance d between the pressing surfaces S1 larger than a factor n ( = 0.3 + (0.0625x-0.15) × (1-cos4θ)) allows the rupture surface of the cut plated steel sheet 5 to be exposed along the second surface. Furthermore, the ratio (C/d) of the clearance C to the distance d between the pressing surfaces S1 smaller than a factor m = 0.4 makes it possible to cut the plated steel sheet 5 that is to be cut without fail.

Furthermore, as the shape of blade portion, the blade portion 110a of the first slitting blade 110 having the cutting edge cross-sectional profile A illustrated in Figure 8 and Figure 9 described above includes the pressing surface S1, the first vertical wall surface S2 perpendicular to the pressing surface S1, and the tool inclined surface S3 that is inclined with respect to the first direction between the pressing surface S1 and the first vertical wall surface S2. The blade portion 110a of the first slitting blade 110 having the cutting edge cross-sectional profile B illustrated in Figure 12 and Figure 13 includes the second vertical wall surface S4 between the tool inclined surface S3 and the pressing surface S1 of the cutting edge cross-sectional profile A. Such a blade portion 110a desirably satisfies the following shape.

### (Inclination Angle (Taper Angle) θ of Tool Inclined Surface)

The inclination angle (the taper angle) θ of the tool inclined surface s1 with respect to the pressing direction is desirably set to 15° or more to 45° or less. When the inclination angle θ is 15° or more, it is possible to ensure a cutting timing that allows the plating of the plating layer 5b of the plated steel sheet 5 to be sufficiently dragged onto the inclined surface. If the inclination angle θ is about 5°, the cutting timing is as early as the cutting timing in the case of the right-angled blade.

On the other hand, a load is applied to the first slitting blade 110 not only in a direction in which the plated steel sheet 5 is sandwiched (first direction) but also in an axial direction (second direction). The larger the inclination angle θ becomes, the heavier the load in the axial direction becomes, which imposes an excessive load on the facility. When the inclination angle θ is 45° or less, the load in the axial direction applied on the first slitting blade 110 does not become excessively heavy, and thus the cutting can be performed under a load up to a withstand load of the facility. If the inclination angle θ is increased to more than 45°, an increase in an effect of dragging the plating obtained by an increase in the load is not significant for the increased inclination angle θ. Therefore, the inclination angle (the taper angle) θ of the tool inclined surface S3 with respect to the first direction is preferably set to 15° or more to 45° or less.

### (Length x of Second Vertical Wall Surface)

In the cutting edge cross-sectional profile B, the length x of the second vertical wall surface S4 in the first direction is desirably 0.1 mm or more to 0.8 mm or less. The second vertical wall surface S4 is provided to ensure the plated steel sheet 5. When the length x of the second vertical wall surface S4 is 0.1 mm or more, it is possible to enhance the tool's performance in cutting the workpiece. Furthermore, when the length x of the second vertical wall surface S4 is 0.1 mm or more, machining of the blade portion 110a is facilitated. In addition, the blade portion 110a of the slitting blade 110 wears with its use. Setting the length x of the second vertical wall surface S4 to 0.1 mm or more makes it possible to extend a lifetime of the slitting blade 110 against wear and to decrease the number of replacements. On the other hand, setting the length x of the second vertical wall surface S4 to 0.8 mm or less makes it possible to avoid a situation in which cutting occurs in a similar way to a right-angled blade. In this way, the length x of the second vertical wall surface S4 in the first direction is preferably 0.1 mm or more to 0.8 mm or less.

Note that while the magnitude of curvature radius of the edge 110b of the blade portion 110a (i.e., a corner portion at which the tool inclined surface S3 and the pressing surface S1 intersect with each other or a corner portion at which the second vertical wall surface S4 and the pressing surface S1 intersect with each other) is not particularly limited, it may be 0.1 mm or less. The curvature radius of the edge 110b does not depend on the sheet thickness of the plated steel sheet 5 that is to be cut, and it may be set as appropriate depending on the material of the plated steel sheet 5 and the like.

As described above, the clearance C between the slitting blades 110 and 120 of a pair and the distance d between the pressing surfaces S1 are made to satisfy the above formula (1), and the shape of the blade portion of at least one slitting blade 110 (120) is made to have the cutting edge cross-sectional profile A or cutting edge cross-sectional profile B. By cutting the plated steel sheet 5 by using such slitting blades 110 and 120, the inclined portion P1 of the blade portion 110a compresses the plating of the plating layer 5b including the base material 5a in the pressing direction (sheet thickness direction) to be dragged onto the inclined surface and the vertical wall surface of the cut end surface, whereas the rupture surface is allowed to be exposed along the second surface. Furthermore, it is possible to cut the plated steel sheet 5 without fail.

### EXAMPLE

A simulation of slit cutting was performed to examine the effect according to the present invention. In the examination, slit cutting performed by the slitting apparatus 100 illustrated in Figure 2 was simulated. The coated material to be cut was a Zn plated steel sheet having the sheet thickness of 4.0 mm. The upper and lower tools had the same shape, and cutability of a plated steel sheet and orientation and the shape of the rupture surface that was successfully cut were examined when the clearance C between the slitting blades of a pair, the inclination angle θ of the tool inclined surface of the slitting blade, and the length x of the second vertical wall surface were varied. Table 1 below shows the results.

### [Table 1]

**Table 1**

| Case | | Clearance C [mm] | Length of Second Vertical Wall Surface x [mm] | Inclination Angle θ [°] | Cutability | Rupture Surface Orientation | Rupture Surface Shape |
|---|---|---|---|---|---|---|---|
| 1 | Comparative Example 1 | 1.6 | 0.8 | 15 | Impossible | - | - |
| 2 | Inventive Example 1 | 1.2 | 0.8 | 15 | Possible | Sheet Width Direction | Figure 14 |
| 3 | Comparative Example 2 | 0.8 | 0.8 | 15 | Possible | Sheet Thickness Direction | - |
| 4 | Inventive Example 2 | 0.8 | 0.8 | 30 | Possible | Sheet Width Direction | Figure 14 |
| 5 | Comparative Example 3 | 0.6 | 0.8 | 30 | Possible | Sheet Thickness Direction | - |
| 6 | Inventive Example 3 | 0.6 | 0.8 | 45 | Possible | Sheet Width Direction | Figure 14 |
| 7 | Comparative Example 4 | 1.6 | 0.8 | 45 | Impossible | - | - |
| 8 | Comparative Example 5 | 1.6 | 0.4 | 15 | Impossible | - | - |
| 9 | Inventive Example 4 | 1.2 | 0.4 | 15 | Possible | Sheet Width Direction | Figure 14 |
| 10 | Inventive Example 5 | 0.8 | 0.4 | 30 | Possible | Sheet Width Direction | Figure 14 |
| 11 | Inventive Example 6 | 0.4 | 0.4 | 45 | Possible | Sheet Width Direction | Figure 14 |
| 12 | Comparative Example 6 | 1.6 | 0.4 | 45 | Impossible | - | - |
| 13 | Comparative Example 7 | 1.6 | 0.1 | 15 | Impossible | - | - |
| 14 | Inventive Example 7 | 1.2 | 0.1 | 15 | Possible | Sheet Width Direction | Figure 14 |
| 15 | Comparative Example 8 | 0.8 | 0.1 | 15 | Possible | Sheet Thickness Direction | - |
| 16 | Inventive Example 8 | 0.4 | 0.1 | 30 | Possible | Sheet Width Direction | Figure 14 |
| 17 | Inventive Example 9 | 1.2 | 0.1 | 30 | Possible | Sheet Width Direction | Figure 15 |
| 18 | Inventive Example 10 | 0.2 | 0.1 | 45 | Possible | Sheet Width Direction | Figure 14 |
| 19 | Comparative Example 9 | 1.6 | 0.1 | 45 | Impossible | - | - |
| 20 | Comparative Example 10 | 0.6 | 0 | 0 | Possible | Sheet Thickness Direction | - |
| 21 | Comparative Example 11 | 0.6 | 0 | 15 | Possible | Sheet Thickness Direction | - |
| 22 | Inventive Example 11 | 0.6 | 0 | 30 | Possible | Sheet Width Direction | Figure 14 |
| 23 | Comparative Example 12 | 1.6 | 0 | 30 | Impossible | - | - |
| 24 | Inventive Example 12 | 0.2 | 0 | 45 | Possible | Sheet Width Direction | Figure 14 |
| 25 | Inventive Example 13 | 1.2 | 0 | 45 | Possible | Sheet Width Direction | Figure 15 |

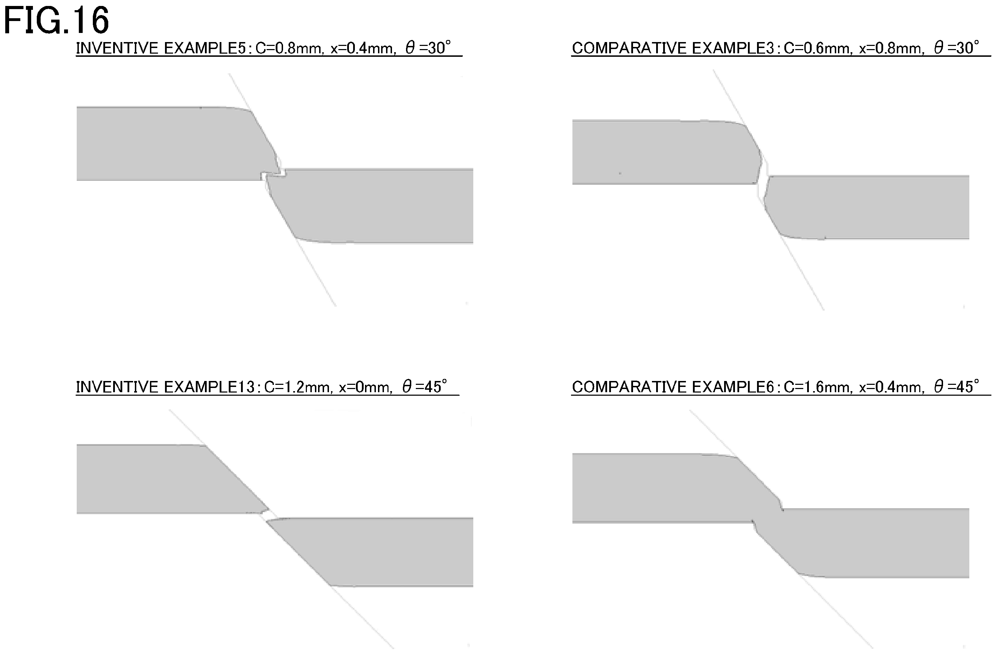

In Inventive examples 1 to 13, the shape of the slitting blade was the cutting edge cross-sectional profile A illustrated in Figure 9 or the cutting edge cross-sectional profile B illustrated in Figure 13 and the clearance C satisfied the above formula (1). Accordingly, when a plated steel sheet was cut by a pair of such slitting blades, the rupture surface was apparent along the sheet width direction. Figure 16 illustrates the shapes of cut end surfaces of Inventive example 5 and Inventive example 13. Inventive example 5 results in the shape of rupture surface composed of the first rupture surface and the second rupture surface illustrated in Figure 14. In Inventive example 13, the clearance C was larger than that in Inventive example 5, and the rupture surface was of one surface along the sheet width direction.

On the other hand, in Comparative examples 1, 4 to 7, 9, and 12, since the clearance C was larger relative to the distance between pressing surfaces of a pair of slitting blades (i.e., the sheet thickness of the plated steel sheet that is to be cut), the plated steel sheet could not be cut (for example, Comparative example 6 in Figure 16). In addition, in Comparative examples 2, 3, 8, 10, and 11, even though the plated steel sheet was successfully cut, the rupture surface was consequently appeared in the sheet thickness direction (for example, Comparative example 3 in Figure 16) since the clearance C is smaller relative to the distance between pressing surfaces of a pair of slitting blades (i.e., the sheet thickness of the plated steel sheet that is to be cut).

The preferred embodiment(s) of the present invention has/have been described above with reference to the accompanying drawings, whilst the present invention is not limited to the above examples. A person skilled in the art may find various alterations and modifications within the scope of the appended claims, and it should be understood that they will naturally come under the technical scope of the present invention.

For example, the above embodiment is described about the slitting apparatus including the pair of slitting blades as a cutting apparatus. However, the present invention is not limited to this example. For example, it suffices that the cutting apparatus according to the present invention includes the first tool and the second tool, and that the blade portion of at least any one of the first tool and the second tool has the cutting edge cross-sectional profile A including the pressing surface, the first vertical wall surface, and the tool inclined surface, or the cutting edge cross-sectional profile B including the pressing surface, the first vertical wall surface, the tool inclined surface, and the second vertical wall surface. At this time, the tools are arranged such that the clearance C between the tools satisfies the above formula (1). For example, the cutting apparatus may be pieces of pressing press tooling for blanking, a shear cutting machine, or the like.

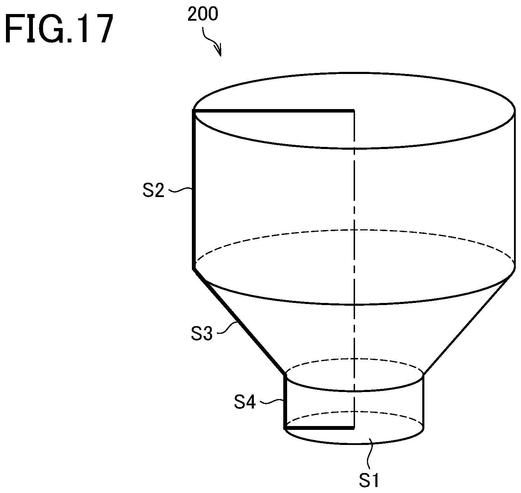

The pressing press tooling includes a punch and a die. At this time, for example, a punch 200 having a shape as illustrated in Figure 17 is used. The punch 200 has the pressing surface S1, the first vertical wall surface S2, the tool inclined surface S3, and the second vertical wall surface S4. The shape of a section of the punch 200 passing through a central axis of the punch 200 is the same as illustrated in Figure 12. While the shape of punch 200 illustrated in Figure 17 is the cutting edge cross-sectional profile B, it may be the cutting edge cross-sectional profile A, which has no second vertical wall surface S4.

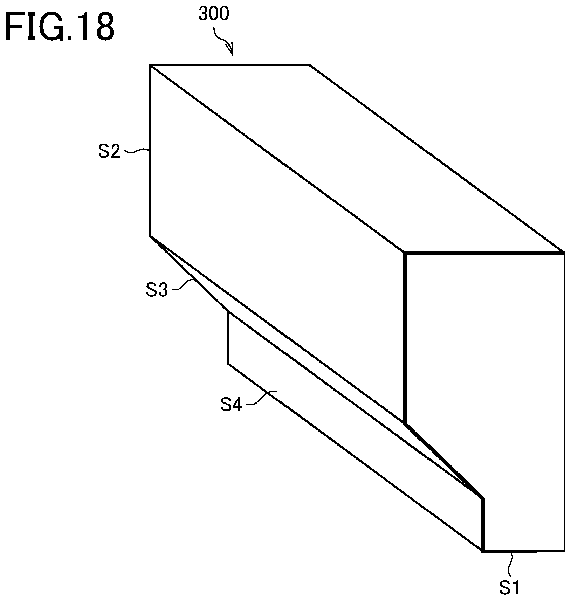

For example, a shear of the shear cutting machine may be formed into a shape of a shear 300 illustrated in Figure 18. The shear 300 has the pressing surface S1, the first vertical wall surface S2, the tool inclined surface S3, and the second vertical wall surface S4. A side shape of the shear 300 is the same as illustrated in Figure 12. While the shape of shear 300 illustrated in Figure 18 is the cutting edge cross-sectional profile B, it may be the cutting edge cross-sectional profile A, which has no second vertical wall surface S4.

As described above, it suffices that the blade portion of at least any one of the first tool and the second tool of the cutting apparatus according to the present embodiment has the sectional shape as illustrated in the cutting edge cross-sectional profile A or cutting edge cross-sectional profile B.

Note that, in a case where pieces of pressing press tooling are used, only one of cut multi-layered materials is generally used as a product. Therefore, it suffices that any one of the first tool and the second tool includes the blade portion having the cutting edge cross-sectional profile A or cutting edge cross-sectional profile B. In contrast, in a case where a slitting apparatus or a shear cutting machine is used, all of cut multi-layered materials may be used as products. Therefore, both the first tool and the second tool may be made to include the blade portions having the cutting edge cross-sectional profile A or cutting edge cross-sectional profile B.

For example, in the above embodiment, the multi-layered material is a plated steel sheet. However, any multi-layered material that is formed by coating surfaces of a base material with a coating material may be used. For example, the base material is not only a steel sheet and may be another type of metallic material. The coating material may be a material made of Zn, Al, or an alloy of Zn and Al, an oxide coating, a coating material, a resin material, or the like. Incidentally, the multi-layered material may be a coated steel sheet in which surfaces of a metallic material being a base material are coated or may be a film-laminated steel sheet in which a film is laminated on a steel sheet. Alternatively, the coating material may be a clad material. For example, the multi-layered material may be a Ni-clad copper material that includes a Cu sheet as its base material and a Ni sheet as its coating material.

The coating material constituting the multi-layered material is not limited to a single layer and may include a plurality of layers. For example, surfaces of the plated steel sheet described above may be subjected to treatment such as chemical treatment, coating, or laminating.

The multi-layered material may be a multi-layered material that includes a resin material, such as a plastic, as its base material and a metallic material, such as Cu, Cr, Ag, Au, or Pt, as its coating material. When a resin material, such as a plastic, coated with a metal is cut, electric conductivity of its end surface is lost. In addition, if a ratio of exposure of the resin is high, the resin material is easily charged, and there is a concern about, for example, occurrence of a spark. Hence, by forming the cut end surface of such a resin material into the same shape as the cut end surface of the multi-layered material according to the present embodiment, it is possible to improve the electric conductivity of the cut end surface, thus preventing the charging.

In a case of a clad material, a demanded purpose of using the clad material subjected to cutting machining differs in accordance with a combination with a coating material and its application. However, by forming the same shape as the cut end surface of the multi-layered material according to the present embodiment, it is possible to improve corrosion resistance, chemical resistance, and the like of the base material on a cut end surface of the clad material by virtue of the effect provided by the coating material. In addition, electric conductivity, thermal conductivity, magnetism, and the like of a part of or the entire cut end surface can be improved as compared to a conventional cutting method.

In a case of a coated or laminated multi-layered material, by forming its cut end surface into the same shape as the cut end surface of the multi-layered material according to the present embodiment, it is possible, on the cut end surface, not only to improve corrosion resistance of its base material, but also to prevent a bulge under the coating or film, to improve its appearance by preventing the base material from being exposed, and to improve insulation properties of a part of or the entire cut end surface.

As seen from the above, by forming a shape of a cut end surface of a multi-layered material into the shape of the cut end surface according to the present embodiment, the effect provided by a coating material on its upper and lower surfaces can be also exerted on the cut end surface of the multi-layered material. Note that the effect provided by the coating material is not limited only to the example described above and can be exerted in accordance with an application.

Note that the following configurations are encompassed by the technical scope of the present invention.
(1) A cutting apparatus for cutting a workpiece sandwiched between a first tool and a second tool in a first direction, wherein
   the first tool and the second tool are disposed such that blade portions of the first tool and the second tool face each other in the first direction,
   the blade portion of the first tool and the blade portion of the second tool each include a pressing surface perpendicular to the first direction and a first vertical wall surface perpendicular to the pressing surface,
   at least any one of the blade portion of the first tool and the blade portion of the second tool includes a tool inclined surface that is inclined with respect to the first direction between the pressing surface and the first vertical wall surface and an angle between the pressing surface and the tool inclined surface is an obtuse angle, and
   a clearance C [mm] between the first tool and the second tool and a distance d [mm] between the pressing surfaces when both the pressing surface of the first tool and the pressing surface of the second tool come into contact with a workpiece that is to be cut satisfy a formula (A) below: $n < C / d < m$
   where, n = 0.3 + (-0.15) × (1-cos4θ), m = 0.4,
   where, θ [°] is an inclination angle of the tool inclined surface with respect to the first direction.
(2) The cutting apparatus according to the above (1), wherein the inclination angle θ is 15° or more to 45° or less.
(3) The cutting apparatus according to the above (1) or (2), wherein each of the first tool and the second tool includes the tool inclined surface.
(4) Th cutting apparatus according to the above (3), wherein shapes of the first tool and the second tool are symmetric.
(5) The cutting apparatus according to any one of the above (1) to (4), wherein
   at least any one of the blade portion of the first tool and the blade portion of the second tool includes a second vertical wall surface perpendicular to the pressing surface between the pressing surface and the tool inclined surface, and
   the formula (A) is satisfied when n = 0.3 + (0.0625x-0.15) × (1-cos4θ), m = 0.4,
   where, x [mm] is a length of the second vertical wall surface in the first direction.
(6) The cutting apparatus according to the above (5), wherein the length x of the second vertical wall surface is 0.1 mm or more to 0.8 mm or less.
(7) A cutting method for cutting a workpiece sandwiched between a first tool and a second tool in a first direction, wherein
   a blade portion of the first tool and a blade portion of the second tool each include a pressing surface perpendicular to the first direction and a first vertical wall surface perpendicular to the pressing surface,
   at least any one of the blade portion of the first tool and the blade portion of the second tool includes a tool inclined surface that is inclined with respect to the first direction between the pressing surface and the first vertical wall surface, and an angle between the pressing surface and the tool inclined surface is an obtuse angle, and
   the method includes sandwiching a workpiece between the first tool and the second tool and performing cutting such that a clearance C [mm] between the first tool and the second tool and a distance d [mm] between the pressing surfaces when both the pressing surface of the first tool and the pressing surface of the second tool come into contact with the workpiece that is to be cut satisfy a formula (A) below: $n < C / d < m$
   where, n = 0.3 + (-0.15) × (1-cos4θ), m = 0.4,
   where, θ [°] is an inclination angle of the tool inclined surface with respect to the first direction.
(8) The cutting method according to the above (7), wherein
   at least any one of the blade portion of the first tool and the blade portion of the second tool includes a second vertical wall surface perpendicular to the pressing surface between the pressing surface and the tool inclined surface, and
   the method includes sandwiching a workpiece between the first tool and the second tool and performing cutting such that the clearance C [mm] between the first tool and the second tool and the distance d [mm] between the pressing surfaces when both the pressing surface of the first tool and the pressing surface of the second tool come into contact with the workpiece that is to be cut satisfy the formula (A) when n = 0.3 + (0.0625x-0.15) × (1-cos4θ), m = 0.4,
   where, x [mm] is a length of the second vertical wall surface in the first direction.
(9) A multi-layered material formed by coating surfaces of a base material with a coating material, the multi-layered material including
   a cut end surface that extends along a sheet thickness direction from a first surface toward a second surface, wherein
   the cut end surface
   includes an inclined surface, a vertical wall surface, and a rupture surface in this order, the inclined surface being inclined with respect to the sheet thickness direction from the first surface, the vertical wall surface being continued from the inclined surface and along the sheet thickness direction, the rupture surface connecting the vertical wall surface and the second surface, or
   includes an inclined surface and a rupture surface in this order, the inclined surface being inclined with respect to the sheet thickness direction from the first surface, the rupture surface connecting the inclined surface and the second surface,
   at least part of the inclined surface is coated with the coating material that is continued from the first surface, and
   at least part of the rupture surface is along the second surface.
(10) The multi-layered material according to the above (9), wherein a length of the rupture surface in a sheet width direction is 30% or less of the sheet thickness of the multi-layered material.
(11) The multi-layered material according to the above (9) or (10), wherein the first surface intersects with the inclined surface, and
   an internal angle between the first surface and the inclined surface is an obtuse angle.
(12) The multi-layered material according to any one of the above (9) to (11), wherein
   the rupture surface includes a first rupture surface and a second rupture surface, and
   the first rupture surface and the second rupture surface intersect with each other.
(13) The multi-layered material according to the above (12), wherein an intersection angle of the first rupture surface and the second rupture surface is less than 90°.
(14) The multi-layered material according to any one of the above (9) to (13), wherein the coating material is made of Zn, Al, or an alloy of Zn and Al.
(15) The multi-layered material according to any one of the above (9) to (14), wherein the base material is a steel sheet.

### REFERENCE SIGNS LIST

- 5: plated steel sheet (multi-layered material)
- 5a: base material
- 5b: plating layer (coating material)
- 5s: cut end surface
- 10: pay-off reel
- 11: first slitting blade
- 11a: blade portion (first slitting blade)
- 12: second slitting blade
- 12a: blade portion (second slitting blade)
- 20: tension generating device
- 30: tension reel
- 100: slitting apparatus
- 110: first slitting blade
- 110a: blade portion (first slitting blade)
- 110b: edge
- 120: second slitting blade
- 120a: blade portion (second slitting blade)
- 120b: edge
- 200: punch
- 300: shear
- S1: pressing surface
- S2: first vertical wall surface
- S3: tool inclined surface
- S4: second vertical wall surface

## Claims

1. A cutting apparatus for cutting a workpiece sandwiched between a first tool and a second tool in a first direction, wherein
the first tool and the second tool are disposed such that blade portions of the first tool and the second tool face each other in the first direction,
the blade portion of the first tool and the blade portion of the second tool each include a pressing surface perpendicular to the first direction and a first vertical wall surface perpendicular to the pressing surface,
at least any one of the blade portion of the first tool and the blade portion of the second tool includes a tool inclined surface that is inclined with respect to the first direction between the pressing surface and the first vertical wall surface and an angle between the pressing surface and the tool inclined surface is an obtuse angle, and
a clearance C [mm] between the first tool and the second tool and a distance d [mm] between the pressing surfaces when both the pressing surface of the first tool and the pressing surface of the second tool come into contact with a workpiece that is to be cut satisfy a formula (A) below: $n < C / d < m$
where, n = 0.3 + (-0.15) × (1-cos4θ), m = 0.4,
where, θ [°] is an inclination angle of the tool inclined surface with respect to the first direction.

2. The cutting apparatus according to claim 1, wherein the inclination angle θ is 15° or more to 45° or less.

3. The cutting apparatus according to claim 1 or 2, wherein each of the first tool and the second tool includes the tool inclined surface.

4. The cutting apparatus according to claim 3, wherein shapes of the first tool and the second tool are symmetric.

5. The cutting apparatus according to claim 1 or 2, wherein
at least any one of the blade portion of the first tool and the blade portion of the second tool includes a second vertical wall surface perpendicular to the pressing surface between the pressing surface and the tool inclined surface, and
the formula (A) is satisfied when n = 0.3 + (0.0625x-0.15) × (1-cos4θ), m = 0.4,
where, x [mm] is a length of the second vertical wall surface in the first direction.

6. The cutting apparatus according to claim 5, wherein the length x of the second vertical wall surface is 0.1 mm or more to 0.8 mm or less.

7. A cutting method for cutting a workpiece sandwiched between a first tool and a second tool in a first direction, wherein
a blade portion of the first tool and a blade portion of the second tool each include a pressing surface perpendicular to the first direction and a first vertical wall surface perpendicular to the pressing surface,
at least any one of the blade portion of the first tool and the blade portion of the second tool includes a tool inclined surface that is inclined with respect to the first direction between the pressing surface and the first vertical wall surface, and an angle between the pressing surface and the tool inclined surface is an obtuse angle, and wherein
the method comprises sandwiching a workpiece between the first tool and the second tool and performing cutting such that a clearance C [mm] between the first tool and the second tool and a distance d [mm] between the pressing surfaces when both the pressing surface of the first tool and the pressing surface of the second tool come into contact with the workpiece that is to be cut satisfy a formula (A) below: $n < C / d < m$
where, n = 0.3 + (-0.15) × (1-cos4θ), m = 0.4,
where, θ [°] is an inclination angle of the tool inclined surface with respect to the first direction.

8. The cutting method according to claim 7, wherein
at least any one of the blade portion of the first tool and the blade portion of the second tool includes a second vertical wall surface perpendicular to the pressing surface between the pressing surface and the tool inclined surface, and
the method comprises sandwiching a workpiece between the first tool and the second tool and performing cutting such that the clearance C [mm] between the first tool and the second tool and the distance d [mm] between the pressing surfaces when both the pressing surface of the first tool and the pressing surface of the second tool come into contact with the workpiece that is to be cut satisfy the formula (A) when n = 0.3 + (0.0625x-0.15) × (1-cos4θ), m = 0.4,
where, x [mm] is a length of the second vertical wall surface in the first direction.

9. A multi-layered material formed by coating surfaces of a base material with a coating material, the multi-layered material comprising
a cut end surface that extends along a sheet thickness direction from a first surface toward a second surface, wherein
the cut end surface
includes an inclined surface, a vertical wall surface, and a rupture surface in this order, the inclined surface being inclined with respect to the sheet thickness direction from the first surface, the vertical wall surface being continued from the inclined surface and along the sheet thickness direction, the rupture surface connecting the vertical wall surface and the second surface, or
includes an inclined surface and a rupture surface in this order, the inclined surface being inclined with respect to the sheet thickness direction from the first surface, the rupture surface connecting the inclined surface and the second surface,
at least part of the inclined surface is coated with the coating material that is continued from the first surface, and
at least part of the rupture surface is along the second surface.

10. The multi-layered material according to claim 9, wherein a length of the rupture surface in a sheet width direction is 30% or less of the sheet thickness of the multi-layered material.

11. The multi-layered material according to claim 9, wherein the first surface intersects with the inclined surface, and
an internal angle between the first surface and the inclined surface is an obtuse angle.

12. The multi-layered material according to claim 9, wherein
the rupture surface includes a first rupture surface and a second rupture surface, and
the first rupture surface and the second rupture surface intersect with each other.

13. The multi-layered material according to claim 12, wherein an intersection angle of the first rupture surface and the second rupture surface is less than 90°.

14. The multi-layered material according to claim 9, wherein the coating material is made of Zn, Al, or an alloy of Zn and Al.

15. The multi-layered material according to any one of claims 9 to 14, wherein the base material is a steel sheet.
